# DEMANDE DE BREVET EUROPEEN

(11) **EP 1 402 773 A1**
(43) Date de publication de la demande: **31.03.2004**
(21) Numéro de dépôt: 02102384.1
(22) Date de dépôt: 25.09.2002
(51) Int. Cl.: A01K 13/00

(54) **Dispositif de protection pour cheval.**

(71) Demandeur: Clément, Valery, 74250 Fillinge (FR)
(72) Inventeur: Clément, Valery, 74250 Fillinge (FR)
(74) Mandataire: Van Straaten, Joop

(57) **Abrégé**

Un dispositif de protection pour les jambes arrières des chevaux , conformé à la partie arrière de l'extrémité du membre (1) et remontant jusqu'au-dessus de l'inflexion de l'articulation du membre, sur lequel il prend appui. Ce dispositif comprend de préférence une coque rigide (16), une garniture rembourrée (18) et des lanières de maintien (20), la coque rigide (16) prenant appui au-dessus de l'articulation du membre.

## Description

L'invention concerne les dispositifs destinés à prévenir les blessures aux jambes de chevaux notamment au cours de transports.

L'invention concerne plus particulièrement la protection des jambes arrières du cheval.
On connaît par BE 1012766 et DE 20106800 des dispositifs souples ou rigides de protection des tendons qui n'entravent pas la liberté de mouvement des chevaux.

Ces protections de transport souples, généralement en textile, n'amortissent pas assez les chocs, ne protègent guère les tissus et ont tendance à glisser vers le bas.

Ces dispositifs - s'ils préviennent les blessures à la partie antérieure des jambes, notamment, lorsque le cheval avance le pied vers un obstacle - cependant n'offrent aucune protection effective lorsque le cheval est parqué dans un travail ou dans un box.

On connaît, de même, par US 1,395,689 des protections encerclant les boulets et les pâturons tout en laissant libre les genoux du cheval.

US 4,349,016 décrit une attelle pour bétail. Une telle attelle, totalement rigide, immobilise sur toute sa longueur la jambe ou la patte d'une pièce de bétail et n'est donc pas appropriée pour les transports courants ou ceux d'un cheval en bonne santé.

Le problème inhérent à toutes les protections actuellement sur le marché, c'est qu'elles ne protègent efficacement que la partie antérieure des jambes, essentiellement les canons, boulets et pâturons, lorsque le cheval lance la jambe en avant, ou à la limite, protègent seulement les membres antérieurs d'un coup des sabots postérieurs.

Or, on constate en pratique qu'une partie anatomique qui souffre énormément au cours des transports est l'arrière du jarret, qui n'est jamais protégée efficacement.

En effet, les membres sont, à cet endroit, particulièrement dépourvus de chair. Passée la mince protection naturelle offerte par la peau et les poils, le tendon d'Achille, les tissus tendineux et les cartilages sont donc particulièrement exposés aux chocs. Outre la souffrance qui en résulte, une blessure à cet endroit fait perdre de l'ampleur au mouvement de la jambe et altère les performances, ce qui est particulièrement préjudiciable notamment quand il s'agit de chevaux prenant part à des compétitions.

Le problème soulevé par l'élaboration d'une protection montant jusqu'au jarrets est qu'une telle protection est a priori très malaisée à maintenir en place, et qu'elle risque d'être ressentie par le cheval comme une véritable entrave, le rendant à la fois maladroit et ombrageux, ce qui accroît les risques d'accident et diminue les performances après le transport.

On a cherché à résoudre les problèmes ci-dessus en élaborant une protection qui soit efficace contre les chocs et les heurts, qui reste bien en place et qui soit bien supportée par les chevaux.

L'objet de l'invention est un dispositif de protection pour les jambes arrières des chevaux. Ce dispositif est conformé à la partie arrière de l'extrémité du membre et remonte jusqu'au-dessus de l'inflexion de l'articulation du membre, sur lequel il prend appui.

L'avantage de cette disposition est que la protection tire parti de l'anatomie de la jambe arrière pour assurer un maintien en place efficace de la protection, sans entraver excessivement les mouvements de la jambe et tout en laissant un débattement suffisant à l'articulation. De la sorte, l'animal est protégé contre tous les contacts, même violents, non seulement au cours du transport, mais encore au cours des manoeuvres d'embarquement et de débarquement, des évolutions subséquentes, etc.
Suivant une forme de réalisation préférée, le dispositif comprend une coque rigide, une garniture rembourrée et des lanières de maintien, la coque rigide prenant appui au-dessus de l'articulation du membre.

La présence d'une coque rigide protège le cheval de chocs pouvant être très violents contre une paroi, des éléments saillants etc., cependant que le rembourrage à la fois répartit et atténue les impacts et procure une sensation générale de confort en dépit du serrage des attaches.

L'extrémité inférieure de la protection comprend avantageusement une partie articulée correspondant à l'articulation du boulet.

L'extrémité inférieure de la protection comprend, de façon préférée, vers l'avant, une partie élargie correspondant à l'évasement du sabot.

Les lanières de maintien de la protection sont solidarisées de préférence par accrochage mutuel.

Suivant une forme de réalisation avantageuse, la coque est réalisée en matériau plastique souple.
Suivant une autre forme de réalisation avantageuse, la coque est réalisée en un polymère renforcé de fibres.

Les matériaux qui composent le dispositif gardent de préférence leurs propriétés dans un intervalle de température compris entre -20 et +45°C.

D'autres particularités et avantages de l'invention ressortiront de la description ci-après de modes de réalisation particuliers de l'invention, référence étant faite aux dessins annexés dans lesquels :
La Fig. 1 est une vue générale, en perspective, des deux jambes arrières et d'un cheval, dont l'une est munie du dispositif de l'invention.
La Fig. 2 est une vue générale en perspective du dispositif de l'invention, ouvert.
Les Fig 3 et 4 sont des vues de profil et de l'arrière de la coque du dispositif de l'invention.

Une protection des membres insuffisante peut provoquer chez le cheval à plus ou moins long terme des lésions irréversibles ainsi que des excroissances osseuses - du type suros - pouvant avoir un effet négatif sur le rendement sportif et l'état physique de l'animal (par ex. : capelet chez les chevaux de trot).

Les blessures peuvent retarder la préparation d'un cheval pour une échéance sportive voire même l'en éliminer.

La protection dans son idée originelle est faite pour réduire le risque de blessure provoquée par des appuis intempestifs lors des transports, des chocs répétés - car un cheval énervé tape contre les parois - des frottements divers, ou, plus fréquent qu'on ne le croit, un mauvais aménagement de l'espace de voyage nécessaire à un cheval.

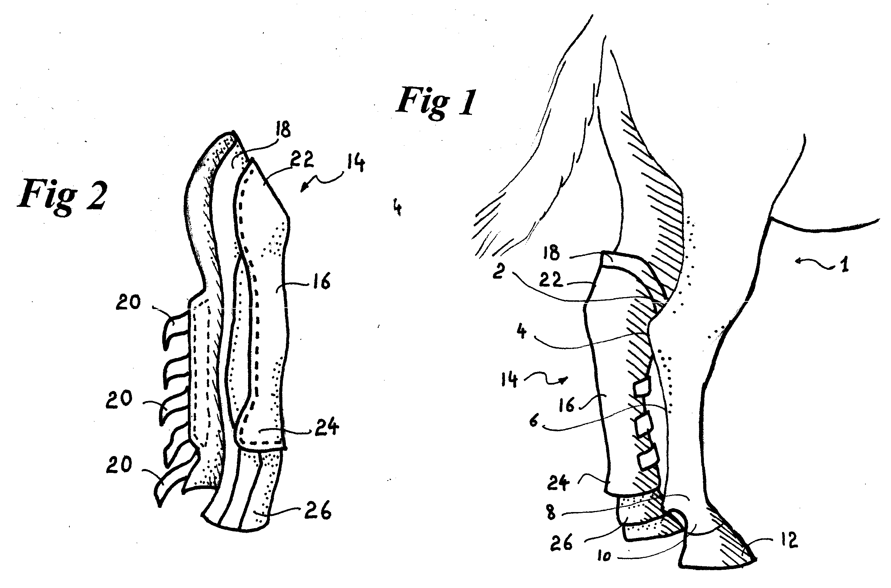

On distingue sur la Fig. 1, les différentes parties de la jambe arrière du cheval, soit, en portant de la jambe 1 proprement dite, le tendon d'Achille 2, le jarret 4, le canon 6, le boulet 8, le paturon 10 et le sabot 12.

Le dispositif de protection de protection de l'invention 14 recouvre la partie postérieure de la jambe arrière droite. Il comprend une coque rigide 16 s'étendant le long du canon 6 et remontant au-dessus de l'inflexion de l'articulation du jarret 4.

La présence d'une garniture intérieure rembourrée 18 et de lanières 20 permet de serrer la protection sur le canon.

La partie souple monte au dessus du jarret et est de forme anatomique pour ne pas gêner la marche de l'animal. Elle est confectionnée dans un matériau résistant pour ne pas se déchirer et pouvoir endurer sans problème les frottements générés par les appuis en transport et éviter ainsi une usure prématuré.

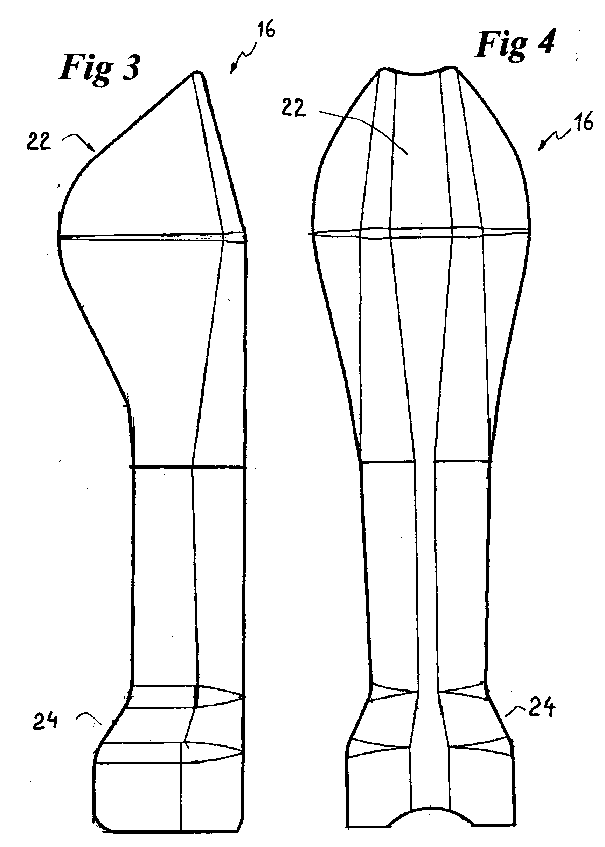

La coque en plastique moulée 16 est accolée à la partie souple, à l'arrière de celle-ci. Elle assume une forme étudiée par rapport à l'anatomie de l'animal, et est formée d'un matériau assez souple pour se déformer et amortir les ondes de chocs, mais néanmoins assez résistant pour ne pas casser ni se fendre, tout en supportant des variations de température (-20°C + 45°C). Comme cela est visible sur les Fig. 3 et 4, la coque peut comprendre des surfaces de rigidification qui, sans en accentuer le poids, lui donne une meilleure résistance mécanique.

La coque rigide 16 présente à sa partie supérieure une partie à la fois infléchie et évasée 22 qui coiffe l'inflexion du membre, assurant de ce fait à cette partie mal protégée naturellement une protection contre les coups et les heurts, et empêchant de surcroît que le dispositif ne descende fortuitement le long du membre ou ne pivote.

Comme on le voit mieux à la Fig. 2, le dispositif se prolonge vers le bas par une deuxième partie évasée 24 coiffant le boulet 8. Cette deuxième partie évasée 24 participe également au maintien en place vertical de la protection.

L'interruption de la coque rigide à hauteur du boulet permet au cheval de ne pas ressentir trop d'inconfort étant donné qu'il peut toujours faire jouer ses articulations.

L'extrémité inférieure 26 de la partie rembourrée est ajustable à l'aide de lanières sur le dessus des sabots, ce qui contribue également à empêcher un glissement vers le bas de la protection et évite qu'elle ne frotte contre le jarret.

Les lanières sont avantageusement garnies de pièces à adhérence mutuelle (type Velcro ®) mais il est bien évident que l'on peut avoir recours à des boucles classiques ou à des lanières élastiques.

## Revendications

1. Un dispositif de protection pour les jambes arrières d'un cheval **caractérisé en ce qu'**il est conformé à la partie arrière des canons et remonte jusqu'au-dessus de l'inflexion de l'articulation du membre, sur lequel il prend appui.

2. Un dispositif de protection suivant la revendication 1 **caractérisé en ce qu'**il comprend
- une coque rigide
- une garniture rembourrée
- des lanières de maintien
la coque rigide prenant appui au-dessus de l'articulation du membre.

3. Un dispositif de protection suivant l'une quelconque des revendications 1 et 2 **caractérisé en ce que** l'extrémité inférieure de la protection comprend une partie articulée correspondant à l'articulation du boulet.

4. Un dispositif de protection suivant l'une quelconque des revendications précédentes **caractérisé en ce que** l'extrémité inférieure de la protection comprend, vers l'avant, une partie élargie correspondant à l'évasement du sabot.

5. Un dispositif de protection suivant l'une quelconque des revendications précédentes **caractérisé en ce que** les lanières de maintien de la protection sont solidarisées par accrochage mutuel.

6. Un dispositif de protection suivant l'une quelconque des revendications 2 à 5 **caractérisé en ce que** la coque est réalisée en matériau plastique souple.

7. Un dispositif de protection suivant l'une quelconque des revendications 2 à 5 **caractérisé en ce que** la coque est réalisée en un polymère renforcé de fibres.

8. Un dispositif de protection suivant l'une quelconque des revendications 2 à 7 **caractérisé en ce que** les matériaux qui la composent gardent leurs propriétés dans un intervalle de température compris entre -20 et +45°C.
